# FASCICULE DE BREVET EUROPEEN

(11) **EP 3 728 143 B1**
(45) Date de publication et mention de la délivrance du brevet: **08.09.2021**
(21) Numéro de dépôt: 18833988.1
(22) Date de dépôt: 19.12.2018
(51) Int. Cl.: C03B 9/33, C03B 9/197

(54) **MACHINE ET PROCÉDÉ DE FABRICATION D'OBJETS EN VERRE**
MASCHINE UND VERFAHREN ZUR HERSTELLUNG VON GLASGEGENSTÄNDEN
MACHINE AND METHOD FOR MANUFACTURING GLASS OBJECTS

(30) Priorité: 22.12.2017 FR 1763094
(43) Date de publication de la demande: 28.10.2020
(73) Titulaire: Arc France, 62510 Arques (FR)
(72) Inventeur: DUPLOUICH, José, 62510 Arques (FR); HENNEBIL, Joël, 62510 Arques (FR); HAMEAU, Martial, 62510 Arques (FR); CARNEL, Eric, 62510 Arques (FR); DONZE, Sébastien, 62510 Arques (FR)
(74) Mandataire: Cabinet Netter
(86) Numéro de dépôt international: PCT/FR2018/053411
(87) Numéro de publication internationale: WO 2019/122716

(56) Documents cités:
- GB-A- 904 817
- US-A- 1 603 524

## Description

La présente invention se rapporte à une machine de fabrication d'objets en verre.

La machine reçoit du verre porté à une température suffisante pour permettre son écoulement par gravité. Le verre malléable est mis en forme et refroidi.

US 2 115 765 décrit un outil pour former une anse de préhension sur un couvercle en verre moulé. À cet effet, le moule est réalisé en une couronne extérieure et une partie intérieure à deux mâchoires articulées. Une fois le verre coulé et moulé, la partie intérieure est soulevée et les mâchoires sont ouvertes libérant l'anse. Un tel outil est inadapté à une production de masse. L'articulation des mâchoires est située dans une zone de température élevée exigeant soit des alliages spéciaux, soit un remplacement très fréquent des pièces. Le mécanisme lui-même est encombrant axialement est inadapté à des verres à boire.

CA 450 853 propose de pincer, après le moulage, une zone à déformer. Toutefois, à ce moment, le verre est refroidi suffisamment pour être peu déformable et exiger un effort mécanique tel que le risque de briser l'objet en verre est élevé.

US 1 603 524 décrit un procédé de fabrication de verre à pied, comprenant déposer une charge de verre dans un moule à sections angulaires, déplacer un outil de pressage dans le moule pour former une ébauche de soufflage, le même outil formant pied et base d'une pièce avec l'ébauche de soufflage à partir de la même charge de verre, le même outil formant une ouverture initiale dans l'ébauche, et ensuite souffler l'ébauche.

La demanderesse a cherché à remédier à ces inconvénients. La demanderesse a cherché à rendre la plus indépendante possible la fabrication du pied et la fabrication de la paraison d'un verre à boire. Ceci permet une manutention réduite et une utilisation plus efficace des machines, par exemple un arrêt de maintenance sur une machine de pressage de pied de verre devient sans influence sur la production des paraisons. Or la soudure du verre exige des épaisseurs de matériaux voisines pour bénéficier d'un refroidissement homogène, des épaisseurs élevées de l'ordre de 5 à 6 mm et nécessite un apport d'énergie. Les autres modes de fixation du pied et de la paraison n'ont pas connu du succès à ce jour, que ce soit pour des raisons esthétiques, d'utilisation journalière ou encore de robustesse.

Plus particulièrement, l'invention offre une liberté de forme sous la paraison. L'invention offre également la liberté de choix de l'épaisseur de verre.

L'invention propose une machine de fabrication d'objets en verre, en particulier de verre à pied, comprenant un moule ébaucheur configuré pour recevoir du verre à température d'écoulement, et un poinçon de pressage mobile en translation selon un premier axe, caractérisée en ce que le moule ébaucheur comprend une partie supérieure monobloc de forme évasée vers le haut, et une partie inférieure de forme non-évasée vers le haut et réalisée en plusieurs pièces, les pièces de la partie inférieure étant mobiles en translation avec une composante selon des axes disposés dans un plan normal au premier axe, la partie supérieure présentant un minimum de dimension selon tout axe normal au premier axe, supérieur au maximum de dimension de la partie inférieure selon ledit axe normal au premier axe de façon que l'objet moulé dans la partie inférieure puisse passer dans la partie supérieure en translation selon le premier axe. On peut ainsi fabriquer une ébauche de diamètre non monotone dans le moule ébaucheur.

Dans un mode de réalisation, la partie supérieure constitue un moule de paraison et la partie inférieure constitue un moule d'organe disposé sous la paraison. La paraison peut être munie d'un organe fonctionnel protubérant.

Dans un mode de réalisation, les pièces de la partie inférieure sont au nombre d'au moins deux. En pratique, on peut prévoir de deux à dix pièces identiques formant ensemble un cercle.

Dans un mode de réalisation, les pièces de la partie inférieure sont des secteurs de moule.

Dans un mode de réalisation, les pièces de la partie inférieure définissent une excroissance latérale. L'excroissance latérale est préférablement annulaire. L'ébauche peut être mise en rotation pour une étape de finition.

Dans un mode de réalisation, les pièces de la partie inférieure sont mobiles en translation dans le plan normal au premier axe.

Dans un mode de réalisation, le moule présente une position de moulage dans laquelle les pièces de la partie inférieure sont serrées l'une contre l'autre définissant une surface de moulage ouverte vers la partie supérieure et close latéralement et vers le bas, et une position d'ouverture dans laquelle les pièces de la partie inférieure sont écartées l'une de l'autre. L'ébauche peut alors être démoulée.

Dans un mode de réalisation, la machine comprend un actionneur disposé sous la partie inférieure et agissant sur les pièces de la partie inférieure entre une position serrée et une position écartée l'une de l'autre. L'actionneur peut être préservé de la chaleur de l'ébauche.

Dans un mode de réalisation, entre l'actionneur et les pièces de la partie inférieure sont prévues des rampes inclinées transformant la translation selon le premier axe en translation selon le deuxième axe. La machine est compacte selon le deuxième axe permettant un montage sur un carrousel.

Dans un mode de réalisation, la machine comprend un moule finisseur monté en aval du moule ébaucheur. Le moule finisseur est configuré pour être sans contact déformant avec la partie inférieure de l'ébauche correspondant à la partie inférieure du moule ébaucheur. La partie inférieure de l'ébauche est préservée. La partie inférieure de l'ébauche est formée en une seule étape. Le cas échéant, un soufflage peut être réalisé dans le moule finisseur.

Dans un mode de réalisation, la partie inférieure du moule ébaucheur est tronconique avec une gorge annulaire.

L'invention propose également un procédé de fabrication d'objets en verre, en particulier de verre à pied, comprenant :
- Fournir un moule ébaucheur à fond fermé, comprenant une partie supérieure monobloc de forme évasée vers le haut, et une partie inférieure de forme non-évasée vers le haut et réalisée en plusieurs pièces,
- verser du verre à température d'écoulement dans le moule ébaucheur,
- déplacer un poinçon de pressage mobile en translation selon un premier axe en appliquant le verre contre le moule ébaucheur, puis le retirer,
- écarter des pièces d'une partie inférieure mobiles en translation avec une composante selon un deuxième axe perpendiculaire au premier axe,
- démouler l'ébauche de la partie supérieure du moule par un mouvement selon le premier axe.

La partie inférieure du moule ébaucheur présente une liberté de forme et l'ébauche peut être mise à sa forme définitive par la partie inférieure du moule ébaucheur.

La présente invention sera mieux comprise à l'étude de la description détaillée d'un mode de réalisation pris à titre d'exemples nullement limitatif illustré sur les dessins annexés :

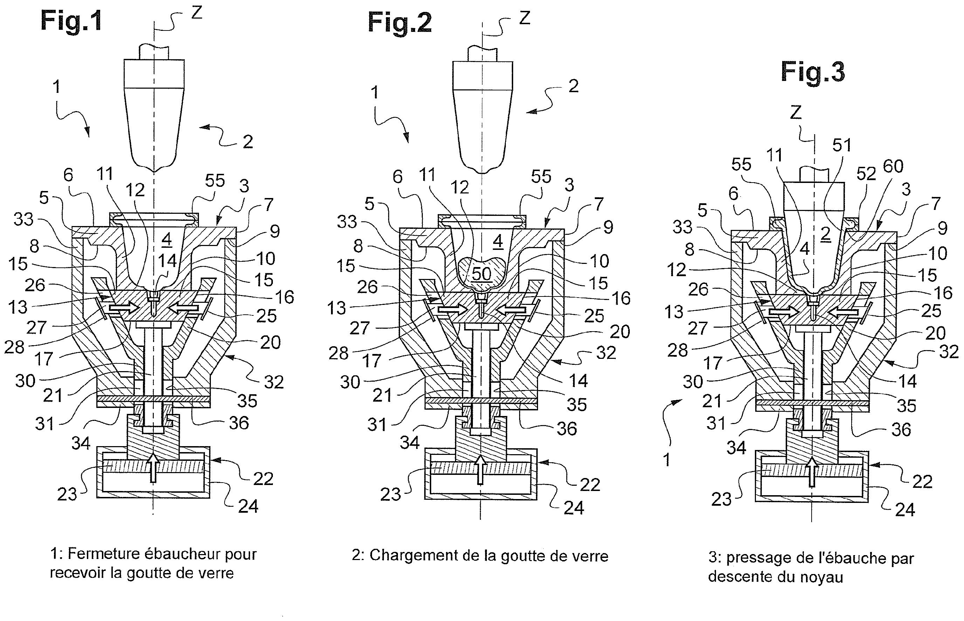

- La figure 1 est une vue en coupe axiale d'une machine selon un aspect de l'invention en position fermée ;
- La figure 2 est une vue de la machine de la figure 1 en cours de chargement ;
- La figure 3 est une vue de la machine de la figure 1 lors du pressage ;

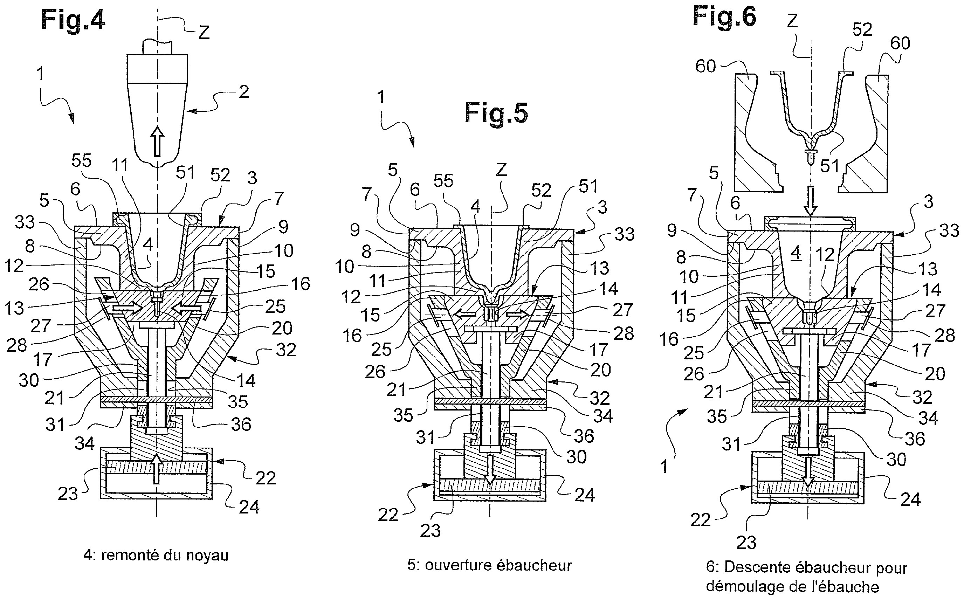

- La figure 4 est une vue de la machine de la figure 1 en position de fin de pressage ;
- La figure 5 est une vue de la machine de la figure 1 en cours d'ouverture ;
- La figure 6 est une vue de la machine de la figure 1 en cours de descente de moule ébaucheur;

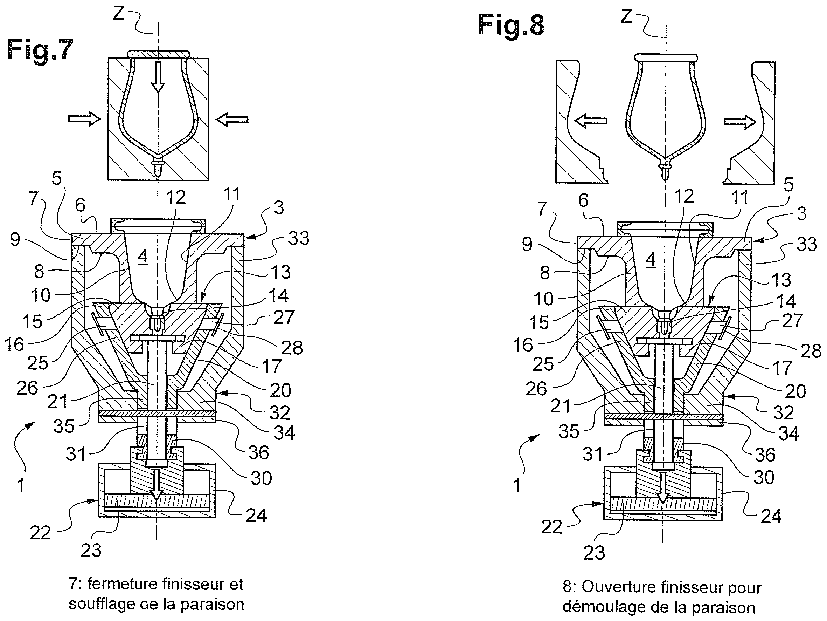

- La figure 7 est une vue de la machine de la figure 1 en position de soufflage ;
- La figure 8 est une vue de la machine de la figure 1 après le soufflage ;

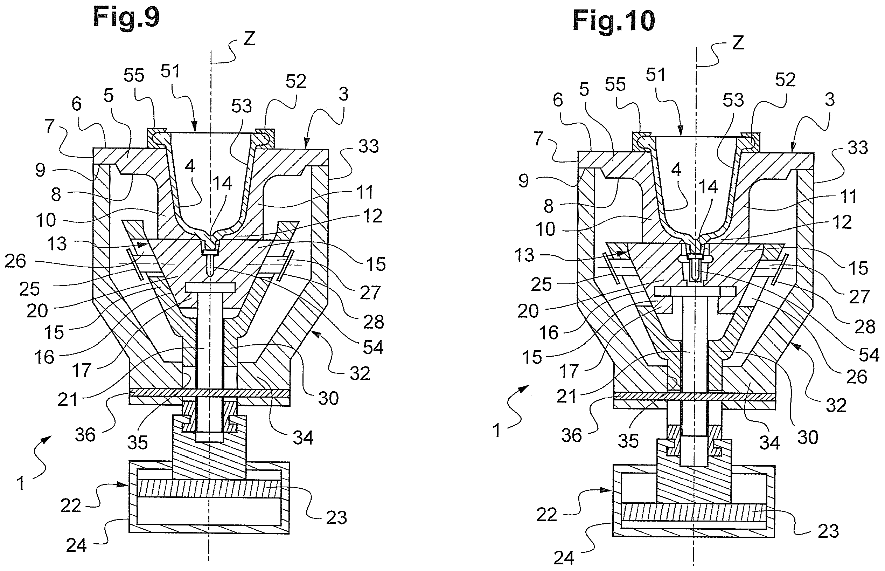

- Les figures 9 et 10 sont des vues agrandies des figures 4 et 5.

Les dessins et la description ci-après contiennent, pour l'essentiel, des éléments de caractère certain. Ils pourront donc non seulement servir à mieux faire comprendre la présente invention, mais aussi contribuer à sa définition, le cas échéant.

Un premier type de machine comprend un moule ébaucheur et un moule finisseur pour une fabrication dans la technologie dite pressé/soufflé. À partir d'une goutte de verre versée dans le moule ébaucheur, le verre est pressé dans ledit moule ébaucheur.

Le moule ébaucheur présente une paroi de moulage monobloc. Un poinçon de pressage est prévu à l'extrémité ouverte du moule ébaucheur. Une fois la goutte de verre versée dans le moule ébaucheur, le poinçon de pressage est descendu par translation et vient appliquer le verre contre la paroi extérieure. Le moule ébaucheur permet de former une ébauche dont la partie de coupe ou paraison présente un diamètre croissant en allant vers le haut. En d'autres termes, le démoulage exige que le diamètre de la paraison soit monotone croissant vers le haut.

Une ébauche est démoulée du moule ébaucheur. Puis, l'ébauche s'allonge avec mise en rotation dans le moule finisseur où le soufflage a lieu pour plaquer la paroi de l'ébauche contre la paroi de moulage du moule finisseur.

La paraison est ensuite fixée à chaud par une soudure sur un pied en verre fabriqué en parallèle.

Par ailleurs, la Demanderesse connaît également la technique du pressé seul qui exige un diamètre de paraison monotone croissant vers le haut et une épaisseur élevée de verre. L'épaisseur élevée de verre est rendue nécessaire par la faible fluidité du verre au sein du moule unique et la difficulté du pressage à chaud à des températures auxquelles la plupart des aciers de construction perdent une grande partie de leurs propriétés mécaniques. Or l'épaisseur élevée de verre alourdit le produit final et augmente son prix de revient à chaque étape de la production. L'épaisseur élevée de verre réduit également la liberté du concepteur de la forme de l'objet.

L'invention vise à remédier aux inconvénients du premier type de machine tout en conservant ses avantages, notamment par rapport aux machines de pressage seul. L'invention vise à offrir une liberté de création aux concepteurs et dessinateurs de verres, notamment verres à boire, en particulier verres à pied, verres gobelets, etc. La paraison est de forme libre et indépendante du reste du verre. La paraison est fabriquée en pressé-soufflé avec moule ébaucheur multipièces.

La machine de fabrication d'objets en verre, en particulier de verre à boire, comprend un moule ébaucheur 1 configuré pour recevoir du verre à température d'écoulement, et un poinçon 2 de pressage mobile en translation selon un premier axe, en général vertical, de manière alternative. Le premier axe est ici dénommé axe Z. Le poinçon 2 présente une forme de révolution de diamètre monotone croissant à partir du bas. Le poinçon 2 est réalisé monobloc en alliage réfractaire. Le poinçon 2 est entraîné par un actionneur linéaire, notamment pneumatique ou électrique. Le poinçon 2 est prévu pour venir former la surface intérieure d'une ébauche 51 en verre.

Le moule ébaucheur 1 comprend une partie supérieure 3 monobloc présentant une concavité supérieure de moulage 4 ou surface intérieure de forme évasée vers le haut. La concavité supérieure de moulage 4 présente une forme de révolution de diamètre monotone croissant à partir du bas. La concavité supérieure de moulage 4 présente une ouverture de petit diamètre à son extrémité inférieure et une ouverture de grand diamètre à son extrémité supérieure. La concavité supérieure de moulage 4 est coaxiale au poinçon 2. La partie supérieure 3 est réalisée monobloc en alliage réfractaire.

Sur la partie supérieure 3, est montée une pince 55 de préhension d'ébauche.

En coupe axiale, la partie supérieure 3 comprend un rebord supérieur 5 s'étendant à partir de l'extrémité supérieure de la concavité supérieure de moulage 4. Le rebord supérieur 5 présente une surface supérieure 6 plane normale à l'axe Z. Le rebord supérieur 5 est annulaire. Le rebord supérieur 5 présente une surface périphérique 7 parallèle à l'axe Z et une surface inférieure 8 parallèle à surface supérieure 6. Entre la surface périphérique 7 et la surface inférieure 8 est ménagé un épaulement 9 annulaire. L'épaulement 9 permet un montage stable et un centrage sur un pot de support voir ci-après. La partie supérieure 3 comprend un corps de moulage 10 s'étendant vers le bas à partir du rebord supérieur 5.

Le corps de moulage 10 présente une forme générale de coupelle ouverte en bas. Le corps de moulage 10 est annulaire. Le corps de moulage 10 comprend une paroi allongée 11 selon l'axe Z et un fond 12 en forme de disque dans un plan normal à l'axe Z. La paroi allongée 11 présente une surface périphérique, ici en cylindre de révolution, et une surface intérieure de moulage tronconique faisant partie de la concavité supérieure de moulage 4. Le fond 12 présente une surface inférieure plane. La surface inférieure plane est normale à l'axe Z. Le fond 12 présente une surface supérieure formant surface de moulage faisant partie de la concavité supérieure de moulage 4. La surface supérieure est en continuité avec la surface intérieure de moulage de la paroi allongée 11.

Le moule ébaucheur 1 comprend une partie inférieure 13 réalisée en plusieurs pièces de moulage. On entend par pièce de moulage, un élément de structure en contact avec le verre en fusion lors du moulage. La partie inférieure 13 présente une surface supérieure en contact avec la surface inférieure de la partie supérieure 3. La partie inférieure 13 est réalisée en secteurs angulaires 15 de nombre compris entre deux et dix. Un nombre choisi entre quatre et dix est préférable pour limiter la course radiale, le nombre pouvant tenir compte du diamètre de la pièce et de la variation de diamètre entre un minimum local et un maximum local situé vers le bas.

Les secteurs angulaires 15 sont mobiles entre une position de moulage et une position de démoulage. En position de moulage, les secteurs angulaires 15 forment une concavité inférieure de moulage 14 de forme non-évasée vers le haut. La concavité inférieure de moulage 14 est fermée vers le bas. La concavité inférieure de moulage 14 est ouverte vers le haut en communication avec la concavité supérieure de moulage.

Les secteurs angulaires 15 présentent des plans séparatifs passant par l'axe Z. Les secteurs angulaires 15 sont mobiles en translation avec une composante selon un deuxième axe perpendiculaire à l'axe Z. Ici, les secteurs angulaires 15 sont mobiles en translation dans un plan normal à l'axe Z. La concavité inférieure de moulage 14 est de forme circulaire ou non. La concavité inférieure de moulage 14 est de diamètre non monotone décroissant vers le bas alors que la concavité supérieure de moulage 4 est de diamètre monotone décroissant vers le bas. Ici, la concavité inférieure de moulage 14 présente une gorge annulaire pour former un bourrelet annulaire dans une partie inférieure de l'ébauche.

En d'autres termes, la concavité inférieure de moulage 14 est libre de présenter des variations de dimension radiale, croissantes et décroissantes en allant vers le bas. La concavité inférieure de moulage 14 peut nécessiter le mouvement radial des secteurs angulaires 15 pour le démoulage tandis que la concavité supérieure de moulage 4 est démoulable par mouvement axiale relatif de l'ébauche et de ladite concavité supérieure de moulage 4. La partie supérieure 3 présente, selon tout axe dans un plan normal au premier axe, un minimum de dimension supérieur au maximum de dimension de la partie inférieure selon ledit axe normal au premier axe de façon que l'objet moulé dans la partie inférieure puisse passer dans la partie supérieure en translation selon le premier axe.

Non seulement, l'ébauche et ladite concavité supérieure de moulage 4 sont aptes au démoulage, mais, en plus, la partie inférieure de l'ébauche moulée dans la concavité inférieure de moulage 14 est apte à passer dans la concavité supérieure de moulage 4. En position de démoulage, les secteurs angulaires 15 sont espacés angulairement les uns des autres et libèrent un espace de dimension radiale supérieure ou égale au minimum de dimension radiale de la concavité supérieure de moulage 4.

La partie inférieure 13, en position de moulage, présente une surface périphérique tronconique 16. La surface périphérique tronconique 16 est en contact avec un guide tronconique 20. La partie inférieure 13 présente une zone inférieure 17 coopérant avec un bras 21 de support. La coopération peut être assurée par solidarisation axiale et liberté radiale, par exemple par une extrémité de bras 21 en T disposée dans une forme concave correspondante.

Le guide tronconique 20 et le bras 21 de support sont solidaires l'un de l'autre. Le guide tronconique 20 et le bras 21 de support sont mobiles en translation selon l'axe Z. Le guide tronconique 20 et le bras 21 de support sont entraînés par un actionneur 22. L'actionneur 22 comprend, ici, un ensemble pneumatique - piston 23 et cylindre 24 -. L'actionneur 22 est capable de déplacer le guide tronconique 20 et le bras 21 de support entre une position haute et une position basse et de les maintenir dans chacune de ces positions. La position haute correspond à la position de moulage. La position basse correspond à la position de démoulage.

La transformation de la translation d'axe Z de l'actionneur 22 en translation radiale des secteurs angulaires 15 est effectuée par la pente du cône du guide tronconique 20 dans le sens de la montée. La partie inférieure 13 est maintenue immobile selon l'axe Z. Le déplacement vers le haut du guide tronconique 20, par contact de la surface intérieure tronconique avec la surface périphérique tronconique 16 contraint les secteurs angulaires 15 à se resserrer.

Les secteurs angulaires 15 sont indexés au guide tronconique 20 dans l'autre sens, notamment par l'intermédiaire d'un rail en T 25 passant dans une fente 26 ménagée dans le guide tronconique 20. Le rail en T 25 vient en contact avec la surface extérieure tronconique du guide tronconique 20. Les rails en T 25 et les surfaces extérieures des secteurs angulaires 15 forment des rampes inclinées transformant la translation selon le premier axe en translation dans le plan normal au premier axe en coopération avec les surfaces tronconiques intérieure et extérieure du guide tronconique 20.

Plus précisément, le rail en T 25 comprend une âme 27 et une barre 28. L'âme 27 est fixée à une extrémité au secteur angulaire 15 et supporte à son extrémité opposée la barre 28, l'âme 27 passant dans ladite fente 26. L'âme 27 présente une forme de parallélogramme. La barre 28 est en saillie au-delà du guide tronconique 20. Ainsi dans le sens inverse, le déplacement vers le bas du guide tronconique 20 contraint les secteurs angulaires 15 à s'écarter. La barre 28 exerce alors une traction sur le secteur angulaire 20 correspondant.

Le guide tronconique 20 se prolonge vers le bas par un manchon 30 entourant le bras 21. Le manchon 30 est percé par un trou oblong 31. La partie supérieure 3 du moule ébaucheur 1 repose par le rebord 5 sur un support extérieur 32. Le support extérieur 32 est ici annulaire avec une paroi cylindrique supérieure 33 supportant ladite partie supérieure 3, et un fond 34 pourvu d'un trou traversant central 35. Le manchon 30 et le bras 21 passent dans ledit trou 35. Une barre transversale 36 est fixée au support extérieur 32. La barre transversale 36 traverse le trou 35. La barre transversale 36 passe dans le trou oblong 31 du manchon 30 et du bras 21. Le trou oblong 31 est d'axe normal à l'axe Z et présente une dimension principale ou grand diamètre selon l'axe Z. Le manchon 30 et le bras 21 sont assujettis en rotation au support extérieur 32 tout en ayant une liberté en translation selon l'axe Z dans la limite imposée par la principale dimension du trou oblong 31.

Par ailleurs, la machine comprend également un poinçon ou noyau de pressage 2 mobile en translation selon l'axe Z. Le poinçon 2 sert de piston tandis que le moule ébaucheur 1 sert de cylindre pour la formation de l'ébauche à partir d'une goutte de verre 50 reçue dans le moule ébaucheur 1. Le poinçon 2 présente une forme et une dimension telle que l'ébauche présente une épaisseur relativement homogène dans la partie d'ébauche correspondant à la partie supérieure 3 du moule ébaucheur 1. Le poinçon 2 reste sensiblement au-dessus des secteurs angulaires 15, notamment à un niveau supérieur à la surface inférieure de la partie supérieure 3.

Dans une première étape, l'actionneur 22 pousse le guide tronconique 20 et le bras 21 vers le haut. Les secteurs angulaires 15 de la partie inférieure 13 se ferment. La partie inférieure 13 et la partie supérieure 3 forment un moule ébaucheur fermé en bas.

Dans une deuxième étape, une goutte de verre 50 est chargée dans le moule ébaucheur 1. La goutte de verre 50 présente une température et donc une viscosité la rendant apte à être mise en forme. Par gravité, la goutte de verre se situe dans le fond de la concavité du moule ébaucheur 1.

Dans une troisième étape, le poinçon 2 descend et entre en contact avec la goutte de verre 50. Le poinçon 2 provoque le fluage du verre entre les parois du moule ébaucheur 1 et du poinçon 2 lui-même. Le poinçon 2 provoque également le fluage du verre vers le bas dans la partie inférieure 13, entre les secteurs angulaires 15, et vers le haut pour former un rebord 52 dans la pince 55. L'ébauche 51 comprend un rebord 52, une partie supérieure ou paraison 53, et une partie inférieure ou organe fonctionnel 54. La paraison 53 est conformée par le poinçon 2 et la concavité supérieure 4. La paraison 53 est de forme évasée de manière à être démoulable de la partie supérieure monobloc 3. L'organe fonctionnel 54 est de forme non évasée. L'organe fonctionnel 54 est, ici, un téton d'axe Z dirigé vers le bas et présentant un bourrelet annulaire en saillie radiale.

Dans une quatrième étape, le poinçon 2 est remonté est ainsi dégagé de l'ébauche 51. La température du verre de l'ébauche ayant baissé, l'ébauche 51 conserve sa forme et sa dimension.

Dans une cinquième étape, l'actionneur 22 tire le guide tronconique 20 et le bras 21 vers le bas. Les secteurs angulaires 15 de la partie inférieure 13 s'écartent. La partie inférieure 13 du moule ébaucheur 1 parvient à une position d'ouverture. La partie de l'ébauche 51 située sous la partie supérieure 3 du moule ébaucheur 1 est libérée.

Dans une sixième étape, l'ensemble du moule ébaucheur 1 est dégagé vers le bas. L'ébauche 51 est maintenue par la pince 55 en prise avec le rebord 52. L'ébauche 51 est démoulée de la partie supérieure 13. L'ébauche 51 peut être retenue par un bord supérieur. Un moule finisseur 60 réalisé en plusieurs secteurs angulaires peut être amené par un mouvement dans un plan normal à l'axe Z. Le moule finisseur 60 vient en contact avec la partie supérieure de l'ébauche. Le moule finisseur 60 est préférablement distant de la partie inférieure de l'ébauche. Le moule finisseur 60 est sans contact déformant avec la partie inférieure de l'ébauche formée précédemment par la partie inférieure du moule ébaucheur.

Dans une septième étape, le moule finisseur 60 est refermé autour de l'ébauche 51 et un soufflage à l'air sous pression est réalisé dans la concavité de l'ébauche 51. La paraison issue de l'ébauche 51 peut ainsi prendre une forme de verre ballon ou plus généralement de verre dont l'embouchure présente un diamètre inférieur à une autre partie de la paraison. La partie inférieure de l'ébauche 51 correspondant à la partie inférieure 13 du moule ébaucheur 1 présente une forme libre dans l'enveloppe constituée par les minimums des dimensions transversales de la partie supérieure 3. La partie inférieure 13 du moule ébaucheur 1 forme un moule d'organe disposé sous la paraison. La partie inférieure 13 du moule ébaucheur 1 définit une excroissance latérale, préférablement annulaire, de la partie inférieure de l'ébauche 51.

Dans une huitième étape, le moule finisseur 60 est écarté et la paraison issue de l'ébauche 51 est démoulée.

L'invention fournit une machine et un procédé de production offrant une liberté de conception d'un objet en verre considérablement plus large que précédemment. La paraison peut faire l'objet d'un soufflage tandis que la partie inférieure peut être munie d'un renflement facilitant la tenue mécanique de l'ensemble.

## Revendications

1. Machine de fabrication d'objets en verre, en particulier de verre à pied, comprenant un moule ébaucheur (1) configuré pour recevoir du verre à température d'écoulement, et un poinçon (2) de pressage mobile en translation selon un premier axe, **caractérisée en ce que** le moule ébaucheur (1) comprend une partie supérieure (3) monobloc de forme évasée vers le haut, et une partie inférieure (13) de forme non-évasée vers le haut et réalisée en plusieurs pièces, les pièces de la partie inférieure (13) étant mobiles en translation avec une composante selon des axes disposés dans un plan normal au premier axe, la partie supérieure (3) présentant, selon tout axe normal au premier axe, un minimum de dimension supérieur au maximum de dimension de la partie inférieure (13) selon ledit axe normal au premier axe de façon que l'objet moulé dans la partie inférieure (13) puisse passer dans la partie supérieure (3) en translation selon le premier axe.

2. Machine selon la revendication 1, dans laquelle la partie supérieure (3) constitue un moule de paraison et la partie inférieure (13) constitue un moule d'organe disposé sous la paraison.

3. Machine selon la revendication 1 ou 2, dans laquelle les pièces de la partie inférieure (13) sont au nombre d'au moins deux.

4. Machine selon l'une des revendications précédentes, dans laquelle les pièces de la partie inférieure (13) sont des secteurs (15) de moule.

5. Machine selon l'une des revendications précédentes, dans laquelle les pièces de la partie inférieure (13) définissent une excroissance latérale, préférablement annulaire.

6. Machine selon l'une des revendications précédentes, dans laquelle les pièces de la partie inférieure (13) sont mobiles en translation dans le plan normal au premier axe.

7. Machine selon l'une des revendications précédentes, dans laquelle le moule présente une position de moulage dans laquelle les pièces de la partie inférieure (13) sont serrées l'une contre l'autre définissant une surface de moulage (14) ouverte vers la partie supérieure (3) et close latéralement et vers le bas, et une position d'ouverture dans laquelle les pièces de la partie inférieure (13) sont écartées l'une de l'autre, l'ébauche (51) pouvant alors être démoulée.

8. Machine selon l'une des revendications précédentes, comprenant un actionneur (22) disposé sous la partie inférieure (13) et agissant sur les pièces de la partie inférieure (13) entre une position serrée et une position écartée l'une de l'autre.

9. Machine selon la revendication 8, dans laquelle entre l'actionneur (22) et les pièces de la partie inférieure (13) sont prévues des rampes inclinées transformant la translation selon le premier axe en translation selon le deuxième axe.

10. Machine selon l'une des revendications précédentes, comprenant un moule finisseur (60) monté en aval du moule ébaucheur (1), le moule finisseur (60) étant configuré pour être sans contact déformant avec la partie inférieure (13) de l'ébauche (51) correspondant à la partie inférieure (13) du moule ébaucheur (1).

11. Procédé de fabrication d'objets en verre, en particulier de verre à pied, comprenant :
- fournir un moule ébaucheur (1) à fond fermé, comprenant une partie supérieure (3) monobloc de forme évasée vers le haut, et une partie inférieure (13) de forme non-évasée vers le haut et réalisée en plusieurs pièces,
- verser du verre à température d'écoulement dans le moule ébaucheur (1),
- déplacer un poinçon (2) de pressage mobile en translation selon un premier axe en appliquant le verre contre le moule ébaucheur (1), puis le retirer,
- écarter lesdites pièces de la partie inférieure (13) mobiles en translation,
- démouler l'ébauche (51) de la partie supérieure (3) du moule par un mouvement selon le premier axe.

## Patentansprüche

1. Maschine zur Herstellung von Glasgegenständen, insbesondere Stielglas, umfassend eine Rohlingsform (1), konfiguriert, um Glas bei Fließtemperatur zu empfangen, und einen entlang einer ersten Achse translatorisch bewegbaren Pressstempel (2), **dadurch gekennzeichnet, dass** die Rohlingsform (1) einen aus einem Stück bestehenden oberen Abschnitt (3) mit nach oben aufgeweiteter Form und einen aus mehreren Teilen bestehenden unteren Abschnitt (13) mit nach oben nicht aufgeweiteter Form umfasst, wobei die Teile des unteren Abschnitts (13) mit einer Komponente entlang von Achsen, die in einer Ebene senkrecht zur ersten Achse angeordnet sind, translatorisch bewegbar sind, wobei der obere Abschnitt (3) entlang allen senkrechten Achsen zur ersten Achse eine minimale Abmessung aufweist, die größer ist als die maximale Abmessung des unteren Abschnitts (13) entlang der Achse senkrecht zur ersten Achse, so dass der im unteren Abschnitt (13) gegossene Gegenstand translatorisch in den oberen Abschnitt (3) gelangen kann, entlang der ersten Achse.

2. Maschine nach Anspruch 1, wobei der obere Abschnitt (3) eine Külbelform und der untere Abschnitt (13) eine Organform bildet, die unter der Külbelform angeordnet ist.

3. Maschine nach Anspruch 1 oder 2, wobei die Anzahl der Teile des unteren Abschnitts (13) mindestens zwei ist.

4. Maschine nach einem der vorhergehenden Ansprüche, wobei die Teile des unteren Abschnitts (13) Gussform-Sektoren (15) sind.

5. Maschine nach einem der vorhergehenden Ansprüche, wobei die Teile des unteren Abschnitts (13) einen seitlichen Vorsprung bilden, vorzugsweise ringförmig.

6. Maschine nach einem der vorhergehenden Ansprüche, wobei die Teile des unteren Abschnitts (13) in der zur ersten Achse senkrechten Ebene translatorisch beweglich sind.

7. Maschine nach einem der vorhergehenden Ansprüche, wobei die Gussform eine Gussstellung hat, in der die Teile des unteren Abschnitts (13) gegeneinander geklemmt sind und so eine Gussformoberfläche (14) bilden, die zum oberen Abschnitt (3) hin offen und seitlich und nach unten geschlossen ist, und eine Offenstellung, in der die Teile des unteren Abschnitts (13) voneinander beabstandet sind, wobei dann der Rohling (51) entformt werden kann.

8. Maschine nach einem der vorhergehenden Ansprüche, umfassend einen unter dem unteren Abschnitt (13) angeordneten Aktuator (22), der auf die Teile des unteren Abschnitts wirkt (13), zwischen einer Klemmposition und einer voneinander beabstandeten Position.

9. Maschine nach Anspruch 8, in der zwischen dem Aktuator (22) und den Teilen des unteren Abschnitts (13) geneigte Rampen vorgesehen sind, die die Translation entlang der ersten Achse in eine Translation entlang der zweiten Achse umwandeln.

10. Maschine nach einem der vorhergehenden Ansprüche, umfassend eine Fertigform (60), die der Rohlingsform (1) nachgeschaltet eingebaut ist (1), wobei die Fertigform (60) so konfiguriert ist, dass sie mit dem unteren Abschnitt (13) des Rohlings (51), der dem unteren Abschnitt (13) der Rohlingsform (1) entspricht, keinen deformierenden Kontakt hat.

11. Verfahren zur Herstellung von Glasgegenständen, insbesondere Stielglas, umfassend:
- Bereitstellen einer Rohlingsform (1) mit geschlossenem Boden, umfassend einen aus einem Stück bestehenden oberen Abschnitt (3) mit nach oben aufgeweiteter Form und einen aus mehreren Teilen bestehenden unteren Abschnitt (13) mit nach oben nicht aufgeweiteter Form.
- Gießen von Glas bei Fließtemperatur in die Rohlingsform (1).
- Verschieben eines translatorisch beweglichen Pressstempels (2) entlang einer ersten Achse und dabei Anlegen des Glases an die Rohlingsform (1), und dann Abziehen.
- Auseinanderbringen der translatorisch beweglichen Stücke des unteren Abschnittes (13).
- Entformen des Rohlings (51) aus dem oberen Abschnitt (3) der Gussform mit einer Bewegung entlang der ersten Achse.

## Claims

1. Machine for manufacturing glass objects, particularly stemmed glass, comprising a blank mould (1) configured to receive glass at flow temperature, and a pressing punch (2) moveable in translation along a first axis, **characterised in that** the blank mould (1) comprises a one-piece upwardly flared upper portion (3), and an upwardly non-flared lower portion (13) and produced in a plurality of parts, the parts of the lower portion (13) being moveable in translation with a component along axes arranged in a plane normal to the first axis, the upper portion (3) having, along any axis normal to the first axis, a minimum dimension greater than the maximum dimension of the lower portion (13) along said axis normal to the first axis so that the moulded object in the lower portion (13) can pass into the upper portion (3) in translation along the first axis.

2. Machine according to claim 1, wherein the upper portion (3) constitutes a parison mould and the lower portion (13) constitutes a member mould arranged below the parison.

3. Machine according to claim 1 or 2, wherein the parts of the lower portion (13) are at least two in number.

4. Machine according to one of the preceding claims, wherein the parts of the lower portion (13) are mould sectors (15).

5. Machine according to one of the preceding claims, wherein the parts of the lower portion (13) define a lateral, preferably annular, protrusion.

6. Machine according to one of the preceding claims, wherein the parts of the lower portion (13) are moveable in translation in the plane normal to the first axis.

7. Machine according to one of the preceding claims, wherein the mould has a moulding position wherein the parts of the lower portion (13) are clamped against one another defining a moulding surface (14) open towards the upper portion (3) and closed laterally and downwardly, and an opening position wherein the parts of the lower portion (13) are moved apart from one another, the blank (51) then able to be demoulded.

8. Machine according to one of the preceding claims, comprising an actuator (22) arranged below the lower portion (13) and acting on the parts of the lower portion (13) between a clamped position and a position moved apart from one another.

9. Machine according to claim 8, wherein between the actuator (22) and the parts of the lower portion (13) are provided inclined ramps transforming the translation along the first axis into translation along the second axis.

10. Machine according to one of the preceding claims, comprising a blow mould (60) assembled downstream of the blank mould (1), the blow mould (60) being configured to be without deforming contact with the lower portion (13) of the blank (51) corresponding to the lower portion (13) of the blank mould (1).

11. Method for manufacturing glass objects, particularly stemmed glass, comprising:
- providing a blank mould (1) with closed bottom, comprising a one-piece upwardly flared upper portion (3), and an upwardly non-flared lower portion (13) and produced in a plurality of parts,
- pouring glass at flow temperature into the blank mould (1),
- moving a pressing punch (2) moveable in translation along a first axis by applying the glass against the blank mould (1), then removing same,
- moving apart said parts of the lower portion (13) moveable in translation,
- demoulding the blank (51) from the upper portion (3) from the mould by a movement along the first axis.
